**Europäisches Patentamt**

**European Patent Office**

**Office européen des brevets**

(19)

(11) Veröffentlichungsnummer : **0 178 457
B1**

# EUROPÄISCHE PATENTSCHRIFT

(12)

(45) Veröffentlichungstag der Patentschrift :
30.11.88

(51) Int. Cl.⁴ : **B 65 B 27/06**

(21) Anmeldenummer : **85111506.3**

(22) Anmeldetag : **11.09.85**

(54) **Abbindevorrichtung zum Abbinden von Wickelgut.**

(30) Priorität : **18.10.84 DE 3438177**

(43) Veröffentlichungstag der Anmeldung :
**23.04.86 Patentblatt 86/17**

(45) Bekanntmachung des Hinweises auf die Patenterteilung : **30.11.88 Patentblatt 88/48**

(84) Benannte Vertragsstaaten :
**FR GB IT**

(56) Entgegenhaltungen :
**EP-A- 0 099 606
DE-A- 3 346 598
DE-B- 1 296 476
FR-A- 2 165 606
FR-A- 2 375 128
US-A- 3 875 855**

(73) Patentinhaber : **Kabelmetal Electro GmbH
Kabelkamp 20
D-3000 Hannover 1 (DE)**

(72) Erfinder : **Dreher, Anton
Steigle 23
D-7240 Horb 1 (DE)**
Erfinder : **Gramer, Josef
Brühlweg 10
D-7240 Horb 1 (DE)**

(74) Vertreter : **Ott, Elmar, Dipl.-Ing.
Kappelstrasse 8
D-7240 Horb 1 (DE)**

EP 0 178 457 B1

**Beschreibung**

Die Erfindung betrifft eine Abbindevorrichtung zum Abbinden von Wickelgut gemäß des Oberbegriffs des Anspruchs 1.

Das Abbinden von Wickelgut, welches mittels eines Wickelkopfes aufgewickelt wurde, erfolgt vorzugsweise durch ein mehrfaches Umreifen mit einem Band oder dergleichen.

Aus der EP-A- 0 099 606 ist eine Abbindevorrichtung bekannt, bei der die Abbindestation radial in einen Schlitz am Wickelkopf einschwenkbar ist, wobei ein zangenartig ausgebildeter Umreifungskanal zunächst in eine offene und dann in eine geschlossene Stellung gebracht werden muß. Diese bekannte Abbindevorrichtung ist in ihrem Aufbau aufwendig und es müssen zum Einsetzen der Abbindevorrichtung am Wickelkopf große Massen bewegt werden, wodurch große Kräfte und Energien erforderlich sind.

Der Erfindung liegt die Aufgabe zugrunde, eine Abbindevorrichtung zu schaffen, die in ihrem Aufbau möglichst einfach ist und schnell in die Abbindeposition gebracht werden kann.

Die Lösung dieser Aufgabe wird durch die im Anspruch 1 angegebenen Merkmale erhalten. Das auf einem Wickelkopf aufgewickelte Wickelgut wird von einem Umreifungskanal weitgehend umschlossen, der das Umreifungsband um das Wickelgut herumlegt. Der Wickelkopf ist zu diesem Zweck seitlich und am Wickelkern geschlitzt, so daß das Umreifungsband eng anliegend um das Wickelgut gelegt werden kann. Nachdem das Umreifungsband um das Wickelgut herumgeführt und am Ende festgeklemmt ist, wird das Umreifungsband zurückgezogen, daß es sich aus dem einseitig offenen Umreifungskanal entfernt und eng um das Wickelgut herumlegt. Es ist eine Transporteinrichtung vorgesehen, die ihre Transportrichtung umkehren und das Umreifungsband spannen kann. Da der Umreifungskanal an seiner dem Wickelgut zugewandten Innenseite offen ist, löst sich das Umreifungsband beim Zurückziehen aus dem Umreifungskanal und legt sich am Wickelgut an. Das festgeklemmte Ende des Umreifungsbandes wird dann mit dem gespannten Umreifungsband vorzugsweise mittels von einer Sonotrode erzeugten Ultraschallwellen verschweißt. Ein Messerbalken trennt dann das zu einem Ring verschweißte Band vom übrigen Band ab. Der Umreifungskanal kann mittels eines pneumatischen Zylinders in den Wickelkopf eingeschoben werden. Die übrigen Einrichtungen können ebenfalls durch entsprechende Einrichtungen vom Wickelkopf abgezogen werden, damit der Wickelkopf geöffnet und das Wickelgut entnommen oder abgeworfen werden kann.

Die verwendete Transporteinrichtung besteht bevorzugt aus zwei übereinander angeordneten Reibrollen, von denen eine als Antriebsrolle und die andere als federnd gelagerte Gegendruckrolle ausgebildet ist. Die Reibrollen ziehen das Umreifungsband von einer Vorratsrolle oder ziehen beim Spannen das Umreifungsband wieder in entgegengesetzter Richtung zurück.

Die für das Festklemmen des freien Bandendes vorgesehene Halteeinrichtung kann aus einem schwenkbaren Amboß und einem Haltestempel bestehen, der das freie Bandende gegen den Amboß drückt und damit festklemmt. Nach dem Abbindevorgang wird der Amboß hinter dem Umreifungsband wieder weggeschwenkt. Hierzu kann ein entsprechender Antrieb vorgesehen sein.

Zum Umreifen des Wickelguts wird vorzugsweise ein in gewissen Grenzen elastisches Umreifungsband verwendet, welches nach Entfernen des Ambosses aufgrund seiner Elastizität eng am Wickelgut anliegt.

Der Wickelkopf ist vorzugsweise zweiteilig ausgebildet und besteht aus einem ersten und einem zweiten, abnehmbaren Seitenflansch. Nach Abbinden des Wickelguts wird der zweite Seitenflansch entfernt und der aus mehreren Einzelsegmenten bestehende Wickelkern im Durchmesser verkleinert, so daß das Wickelgut bequem abgenommen oder durch einen Kippvorgang abgeworfen werden kann.

Vorteilhafte Weiterbildungen sind in den Unteransprüchen gekennzeichnet.

Die Erfindung wird nachfolgend anhand der Zeichnungen näher erläutert. Es zeigen :

Figur 1 eine erfindungsgemäße Abbindevorrichtung in vereinfachter Darstellung,

Figur 2 die Draufsicht eines Haltestempels,

Figur 3 einen Seitenflansch mit Wickelkern eines Wickelkopfes und

Figur 4 die Halteeinrichtung und die Verbindungseinrichtung der in Figur 1 dargestellten Abbindevorrichtung.

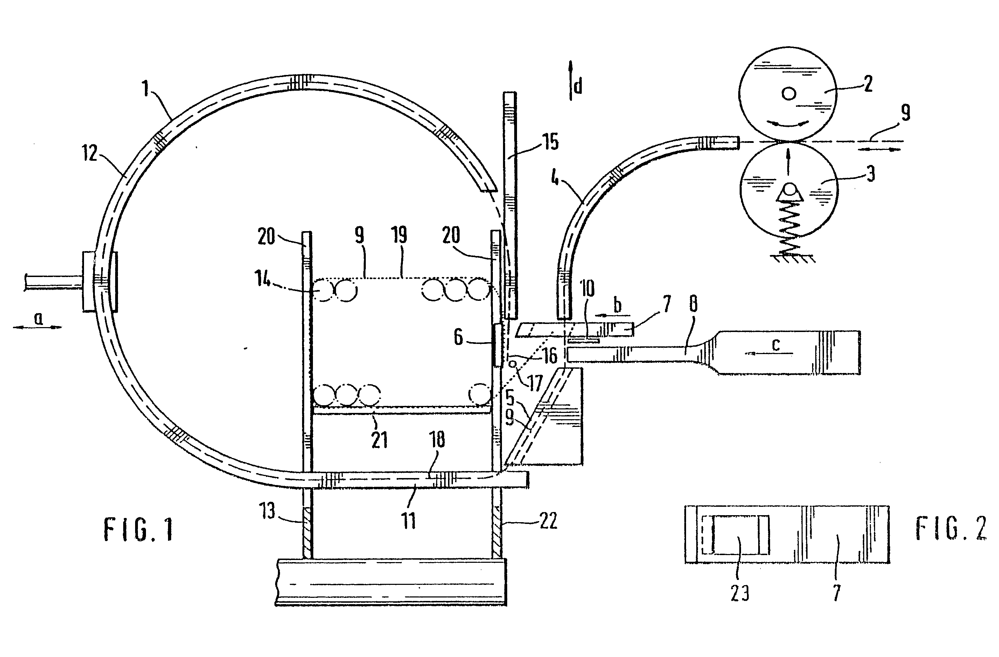

Die in Figur 1 dargestellte Abbindevorrichtung enthält im wesentlichen einen entsprechend der Pfeilrichtung a seitlich verschiebbaren Umreifungskanal 1, eine aus einer Antriebsrolle 2 und einer Gegendruckrolle 3 bestehende Transporteinrichtung, an die sich Führungskanäle 4, 5 anschließen, und Halte- und Verbindungseinrichtungen. Die Halteeinrichtung besteht aus einem Amboß 6 und einem in Pfeilrichtung b verschiebbaren Haltestempel 7. Die Verbindungseinrichtung besteht hier aus einer Sonotrode 8, die entsprechend der Pfeilrichtung c gegen ein Umreifungsband 9 gedrückt werden kann, um das in diesem Bereich überlappende Umreifungsband 9 mittels Ultraschall zu verschweißen. Ein Messerbalken 10 kann ebenfalls entsprechend der Richtung c bewegt werden, so daß er mit seiner oberen Kante das gespannte Umreifungsband 9, welches als gepunktete Linie dargestellt ist, an der Unterseite des Haltestempels 7 abschneidet.

Zwischen der Antriebsrolle 2 und der federnd gegen diese gedrückte Gegendruckrolle 3 befindet sich das Umreifungsband 9, welches von einer hier nicht dargestellten Vorratsrolle entnommen wird. Die Antriebsrolle 2 schiebt das Umreifungsband 9 durch einen ersten Umlenkkanal 4 und an dem Haltestempel 7 und der Sonotrode 8 vorbei. Das Umreifungsband 9 gelangt dann in den zweiten Führungskanal 5, von wo es in den unteren, geraden Teil 11 des Umreifungskanales 1 eingeschoben wird. Das eine gewisse Steifigkeit aufweisende Umreifungsband 9 wird dann in einem ringförmig ausgebildeten Teil 12 des Umreifungskanales 1 um das in einem Wickelkopf 13 befindliche Wickelgut 14 herumgeführt. Ein weiterer senkrechter Kanal 15 führt das freie Ende 16 des Umreifungsbandes 9 am Amboß 6 vorbei, bis ein hier nur andeutungsweise dargestellter Näherungsschalter 17 die Transporteinrichtung stoppt. Als Näherungsschalter 17 kann ein kapazitives oder optisches Schaltelement in ansich bekannter Weise verwendet werden.

Mit dem Anhalten der Transporteinrichtung wird gleichzeitig eine Betätigung des Haltestempels 7 ausgelöst, so daß dieser entsprechend der Pfeilrichtung b gegen das vor dem Amboß 6 verlaufende Umreifungsband 9 gedrückt wird, welches auf diese Weise festgeklemmt wird.

Nach dem Verklemmen des Umreifungsbandes 9 zieht die Antriebsrolle 2 das gestrichelt gezeichnete Umreifungsband zurück, welches damit aus dem einseitig offenen Umreifungskanal 1 hervortritt, bis es gespannt ist und sich entsprechend der gepunkteten Linie eng um das Wickelgut 14 herumlegt. Der gestrichelte Verlauf 18 zeigt den ungespannten Zustand, während der gepunktete Verlauf 19 den gespannten Zustand des Umreifungsbandes 9 zeigt.

Der Umreifungskanal 1, der Führungskanal 5 und der gerade Kanal 15 sind im Profil U-förmig ausgebildet. Die offene Seite dieser Kanäle ist dem Wickelgut zugewandt, damit beim Spannen des Umreifungsbandes 9 dieses aus den Kanälen heraustreten kann.

Der Wickelkopf 13 besitzt seitliche Schlitze 20 und einen in Einzelsegmente unterteilten Wickelkern 21. Unterhalb des Wickelkerns 21 kann der gerade Teil 11 des Umreifungskanales 1 durch die Schlitze 20 in den Wickelkopf 13 seitlich eingeschoben werden. In diesem Bereich ist auch der Wickelkern 21 unterbrochen, so daß das Umreifungsband 9 sich beim Spannen ungehindert um das Wickelgut 14 herumlegen kann.

Der Wickelkopf 13 wird vorzugsweise von einem Schrittmotor SM angetrieben, der ein positioniertes Anhalten des Wickelkopfes ermöglicht. Die Schlitze 20 lassen sich damit exakt in die Stellung bringen, in der ein seitliches Einschieben des Umreifungskanales 1 entsprechend der Pfeilrichtung a möglich ist. Auch die in der Zeichnung rechts neben dem Wickelkopf angeordneten Einrichtungen können gemeinsam als verschiebbare Einheit montiert sein, die sich entsprechend der Pfeilrichtung d aus der dargestellten Stellung entfernen läßt. Es ist somit möglich, sämtliche für das Abbinden erforderlichen Einrichtungen vollständig vom Wickelkopf 13 zu entfernen, so daß das abgebundene Wickelgut 14 problemlos entnommen werden kann. Das Wickelgut 14 kann auch vom Wickelkern 21 abgeworfen werden, wenn zuvor der rechte Seitenflansch 22 abgezogen und der Wickelkern 21 in seinem Durchmesser verringert wurde.

In Figur 2 ist die Draufsicht des Haltestempels 7 dargestellt, der eine Öffnung 23 besitzt, durch die das zugeführte Umreifungsband 9 hindurchgeführt wird.

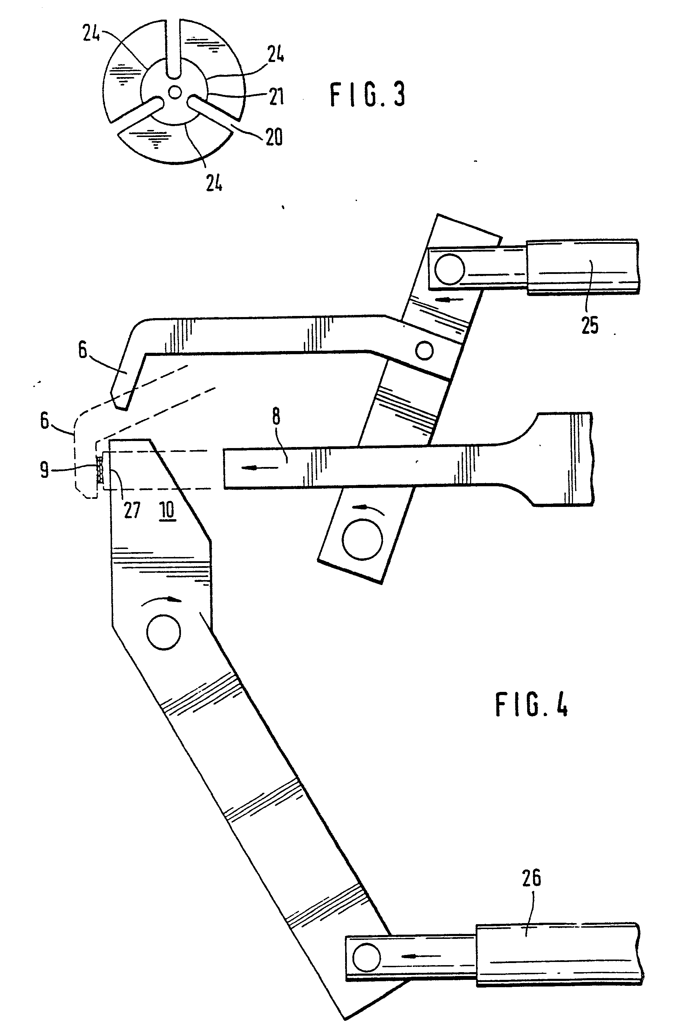

Figur 3 zeigt den Seitenflansch eines Wickelkopfes, der drei Einzelsegmente 24 hat, die den Wickelkern 21 bilden. Zum Abwerfen des Wickelguts sind die Einzelsegmente 24 vorzugsweise nach innen schwenkbar am Seitenflansch befestigt. Bei nach innen geschwenkten Einzelsegmenten 24 kann dann durch ein Kippen des Seitenflansches das Wickelgut vom Wickelkern 21 abgeworfen werden.

In Figur 4 sind die Halteeinrichtung, die Verbindungseinrichtung und der Messerbalken 10 in der Draufsicht dargestellt. Der Amboß 6 läßt sich mittels eines Zylinders 25, in die mit unterbrochenen Linien angedeutete Stellung bringen, die der in Figur 1 dargestellten Stellung entspricht. Mittels eines hier nicht dargestellten weiteren Zylinders läßt sich die Sonotrode 8 ebenfalls in die mit unterbrochenen Linien dargestellte Stellung bringen, in der das zwischen Amboß 6 und Sonotrode 8 überlappende Umreifungsband 9 verschweißt wird. Nach dem Schweißvorgang kann der Messerbalken 10 in die hier dargestellte Stellung mittels eines weiteren Zylinders 26 gebracht werden, wobei das Umreifungsband 9 vom Messerbalken 10 abgeschnitten wird. Die Schneidkante 27 des Messerbalkens 10 gleitet dabei im Bereich der Öffnung 23 an der Unterseite des Haltestempels 7 entlang, so daß das Umreifungsband 9 an den Rand der Öffnung 23 des Haltestempels 7 gedrückt und abgeschnitten wird.

**Patentansprüche**

1. Abbindevorrichtung zum Abbinden von auf einem Wickelkopf (13), dessen beide Seitenteile und dessen Wickelkern (21) geschlitzt sind, aufgewickeltem Wickelgut (14), mit einem verschiebbaren, in radiale Schlitze (20) des Wickelkopfes einführbaren, Umreifungskanal (1), einer Transporteinrichtung (2, 3) für die Zufuhr und das Spannen eines Umreifungsbandes (9) und mit einer im offenen Bereich des Umreifungskanals angeordneten Halte- und Verbindungseinrichtung (6, 7, 8), dadurch gekennzeichnet, daß die Transporteinrichtung (2, 3) und die Halte- und Verbindungseinrichtung (6, 7, 8) auf der einen Seite des Wickelkopfes (13) ortsfest angeordnet sind, während der Umreifungskanal (1) separat auf der anderen Seite des Wickelkopfes (13) in einer parallel zur Wickelachse verlaufenden Richtung (a) verschiebbar angeordnet ist ; daß der Umreifungskanal (1) ein einstückiger, einseitig offener Ring mit einem durch den von Windungen des Wickelguts (14) umschlossenen Innenraum hindurchgreifenden geraden Abschnitt (11) ist ; und daß bei der Halte- und Verbindungseinrichtung angeordnete ortsfeste Führungskanäle (5, 15) das Umreifungsband (9) zum Umreifungskanal (1) und zur Halteeinrichtung (6, 7) führen.

2. Abbindevorrichtung nach Anspruch 1, dadurch gekennzeichnet, daß die Transporteinrichtung eine Antriebsrolle (2) und eine Gegendruckrolle (3) hat, die als Reibrollen ausgebildet sind und zwischen denen das Umreifungsband (9) liegt, daß sich an die Reibrollen Führungskanäle (4, 5) anschließen, die zum Anfang des Umreifungskanales (1) führen, und daß der gerade Kanalabschnitt (11) den Anfang des Umreifungskanales (1) bildet.

3. Abbindevorrichtung nach einem der Ansprüche 1 oder 2, dadurch gekennzeichnet, daß als Halteeinrichtung ein schwenkbarer Amboß (6), der innerhalb des vom Umreifungsband (9) gebildeten Ringes am Umreifungsband (9) anliegt, und ein Haltestempel (7) vorgesehen ist, der an der dem Amboß (6) gegenüberliegenden Seite des Umreifungsbandes (9) an dieses andrückbar ist.

4. Abbindevorrichtung nach Anspruch 3, dadurch gekennzeichnet, daß der Haltestempel (7) eine Öffnung (23) hat, durch die das Umreifungsband (9) zugeführt wird, und daß ein Messerbalken (10) im Bereich dieser Öffnung (23) verschiebbar oder schwenkbar angeordnet ist.

5. Abbindevorrichtung nach einem der Ansprüche 1 bis 4, dadurch gekennzeichnet, daß als Verbindungseinrichtung eine gegen das überlappende Umreifungsband (9) andrückbare Sonotrode (8) vorgesehen ist.

6. Abbindevorrichtung nach einem der Ansprüche 1 bis 5, dadurch gekennzeichnet, daß die Spannkraft beim Spannen des Umreifungsbandes (9) so groß ist, daß eine elastische Dehnung des Umreifungsbandes (9) erfolgt.

7. Abbindevorrichtung nach einem der Ansprüche 1 bis 6, dadurch gekennzeichnet, daß der Wickelkopf (13) aus einem ersten und einem zweiten, abnehmbaren Seitenflansch (22) besteht, daß der erste Seitenflansch den aus mehreren Einzelsegmenten (24) bestehenden Wickelkern (21) trägt, und daß die Einzelsegmente (24) nach innen schwenkbar oder nach innen radial verschiebbar sind.

## Claims

1. Tying off device for tying off winding material (14) wound onto a winding head (13), whose two side parts and winding core (21) are slotted, with a displaceable hooping channel (1) insertable into radial slots (20) of the winding head, a conveying mechanism (2, 3) for the supply and tensioning of a hooping band (9) and with a retaining and connecting device (6, 7, 8) arranged in the open area of the hooping channel, characterized in that the conveying mechanism (2, 3) and retaining and connecting device (6, 7, 8) are fixed on one side of winding head (13), whilst the hooping channel (1) is separately displaceably arranged on the other side of winding head (13) in a direction (a) parallel to the winding axis ; that the hooping channel (1) is a one-piece ring open at one side with a straight portion (11) passing through the inner area surrounded by the turns of the winding material (14) ; and that fixed guide channels (5, 15) arranged at the retaining and connecting device guide the hooping band (9) to the hooping channel (1) and retaining device (6, 7).

2. Tying off device according to claim 1, characterized in that the conveying mechanism has a driving roller (2) and a counterpressure roller (3), which are constructed as friction rollers and between which is located the hooping band (9), that guide channels (4, 5) are connected to the friction rollers and lead to the start of the hooping channel (1) and that the straight channel portion (11) forms the start of the hooping channel (1).

3. Tying off device according to one of the claims 1 or 2, characterized in that the retaining device is constituted by a pivotable anvil (6), which engages on the hooping band (9) within the ring formed by the latter and a retaining punch (7) is provided, which can be pressed onto the hooping band (9) on the side thereof facing anvil (6).

4. Tying off device according to claim 3, characterized in that the retaining punch (7) has an opening (23) through which the hooping band (9) can be supplied and that blade beam (10) is displaceably or pivotably arranged in the vicinity of said opening (23).

5. Tying off device according to one of the claims 1 to 4, characterized in that the connecting device is constituted by a sonotrode (8) which can be pressed against the overlapping hooping band (9).

6. Tying off device according to one of the claims 1 to 5, characterized in that the tension force on tensioning the hooping band (9) is so great that there is an elastic extension of said band.

7. Tying off device according to one of the claims 1 to 6, characterized in that the winding head (13) comprises a first and a second removable side flange (22), that the first side flange carries the winding core (21) comprising several individual segments (24) and that the individual segments (24) can be pivoted inwards or are radially inwardly displaceable.

## Revendications

1. Dispositif de ligature destiné à attacher un bobinage (14), enroulé sur une tête (13) de bobinage dont les deux parties latérales et le noyau ou mandrin (21) sont encochés, comportant un canal (1) de cerclage, mobile, pouvant être introduit dans des encoches (20) radiales de cette tête de bobinage, un mécanisme de transport (2, 3) destiné à amener et serrer une bande (9) de cerclage et un mécanisme de retenue et de jonction (6, 7, 8) disposé dans la zone dégagée de ce canal de cerclage, dispositif caractérisé en ce que le mécanisme de transport (2, 3) et le mécanisme de retenue et de jonction (6, 7, 8) sont fixés d'un côté de la tête (13) de bobinage, tandis que le canal (1) de cerclage est disposé séparément de l'autre côté de cette tête (13) et peut être déplacé dans un sens (a) parallèle à l'axe du bobinage ; en ce que ce canal (1) de cerclage est une couronne monobloc ouverte d'un côté et comportant un tronçon rectiligne (11), qui pénètre dans l'espace intérieur entouré par les spires du bobinage (14) ; et en ce que des canaux (5, 15) fixes de guidage, disposés près du mécanisme de retenue et de jonction, mènent la bande (9) de cerclage au canal (1) de cerclage et à ce mécanisme de retenue (6, 7).

2. Dispositif de ligature selon la revendication 1, caractérisé en ce que le mécanisme de transport a un galet d'entraînement (2) et un galet de réaction (3), qui ont la conformation de galets de friction et entre lesquels se trouve la bande (9) de cerclage ; en ce que se raccordent à ces galets de friction des canaux (4, 5) de guidage, qui mènent au début du canal (1) de cerclage ; et en ce que le tronçon de canal rectiligne (11) forme ce début du canal (1) de cerclage.

3. Dispositif de ligature selon l'une des revendications 1 ou 2, caractérisé en ce qu'il est prévu, comme mécanisme de retenue, une enclume (6) pivotante, qui est appliquée contre la bande (9) de cerclage à l'intérieur de la boucle formée par cette bande, et un poinçon (7) de retenue, qui peut être appliqué contre cette bande (1) de cerclage du côté de celle-ci opposé à l'enclume (6).

4. Dispositif de ligature selon la revendication 3, caractérisé en ce que le poinçon (7) de retenue a une ouverture (23) dans laquelle on fait passer la bande (9) de cerclage, et en ce qu'une lame (10) peut coulisser ou pivoter à l'emplacement de cette ouverture (23).

5. Dispositif de ligature selon l'une des revendications 1 à 4, caractérisé en ce que le dispositif de jonction est une sonotrode (8) qui peut être appliquée contre la partie en recouvrement de la bande (9) de cerclage.

6. Dispositif de ligature selon l'une des revendications 1 à 5, caractérisé en ce que la tension pendant le serrage de la bande (9) de cerclage est assez grande pour provoquer un allongement élastique de cette bande.

7. Dispositif de ligature selon l'une des revendications 1 à 6, caractérisé en ce que la tête (13) de bobinage est composée d'un premier et d'un second flasques (22) latéraux amovibles ; en ce que le premier flasque latéral porte le noyau (21) de bobinage composé de plusieurs segments (24) ; et en ce que ces segments (24) peuvent pivoter vers l'intérieur ou être repoussés radialement vers l'intérieur.

FIG. 2

FIG. 1

FIG.3

FIG.4